# EUROPÄISCHE PATENTANMELDUNG

(11) **EP 3 048 595 A1**
(43) Veröffentlichungstag der Anmeldung: **27.07.2016**
(21) Anmeldenummer: 16151716.4
(22) Anmeldetag: 18.01.2016
(51) Int. Cl.: G08G 1/01, G01S 1/68, G08G 1/056, G08G 1/0967

(54) **VERFAHREN UND SYSTEM ZUR INSBESONDERE FAHRSTREIFENGENAUEN RICHTUNGSORTUNG VON FAHRZEUGEN AUF FAHRSTREIFEN UND AUSGABE VON WARNMELDUNGEN BEI FALSCHFAHRTEN**

(30) Priorität: 20.01.2015 DE 102015100748
(71) Anmelder: Deutsche Telekom AG, 53113 Bonn (DE)
(72) Erfinder: SINNING, Thorsten, 52080 Aachen (DE); ASSENBAUM, Hans-Jörg, 33335 Gütersloh (DE)
(74) Vertreter: Braun-Dullaeus, Karl-Ulrich

(57) **Zusammenfassung**

Verfahren zur Erkennung der Fahrtrichtung und zur Ermittlung von Falschfahrten eines sich in einem Straßenabschnitt auf einem Fahrstreifen bewegenden Fahrzeugs (110, 210, 310, 330, 320, 340),
wobei von einer Anordnung von Funkbaken (102-105; 201-207; 301-303; 401-406), die entlang des Fahrstreifens angeordnet sind, jeweils Kennungen ("102"-"105"; "201"-"207"; "301"-"303"; "401"-"406") ausgesendet werden, wobei beim Durchfahren des Straßenabschnitts ein im Fahrzeug angeordneter Funkempfänger, insbesondere Mobilfunkgerät, nacheinander die ausgesendeten Kennungen der Funkbaken empfängt und wobei anhand der Reihenfolge der nacheinander empfangenden Kennungen die tatsächliche Fahrtrichtung (R) des Fahrzeugs ermittelt wird.

## Beschreibung

Die vorliegende Erfindung bezieht sich auf das Gebiet der Telemetrie, insbesondere auf die Verifizierung der Fahrtrichtung von Fahrzeugen an Auffahrten oder Richtungsfahrbahnen.

Das Dokument DE 10 2010 025 379 A1 offenbart ein Verfahren zur Ermittlung von und Warnung vor Falschfahrern sowie ein Falschfahrer-Melde- und Warnsystem. Auf Fahrbahnabschnitten werden Baken vorgesehen, welche Funkfelder aussenden. Beim Durchfahren des Fahrbahnabschnittes treten in regelmäßigen Folgen Abschattungen auf, deren Reihenfolge ermittelt und ausgewertet wird. Durch einen Vergleich der Abschattungsreihenfolge mit einem hinterlegten Muster ergibt sich eine Information über die Fahrtrichtung des Fahrzeugs. Wenn es sich dabei um einen Falschfahrer handelt, wird ein Warnsigna! ausgelöst.

Bisherige Verfahren zur Erkennung von Falschfahrer, wie das vorhergehende benötigen eingebaute spezielle Geräte an Bord eines Autos, sowie Baken am Straßenrand. Eine ausreichende Trefferwahrscheinlichkeit für einen Falschfahrer ist nur dann gegeben, wenn diese Geräte in vielen Autos eingebaut sind. Es ist damit also nicht davon auszugehen, dass solche Systeme flächendeckend einsatzbereit sind.

Es ist daher eine Aufgabe der Erfindung, ein Verfahren und ein System zur Erkennung von Falschfahrern möglichst flächendeckend aufzubauen, ohne auf spezielle, in den Fahrzeugen eingebaute Geräte zurückgreifen zu müssen.

Die der Erfindung zugrundeliegende Aufgabe wird gelöst durch ein Verfahren nach Anspruch 1 sowie ein System nach Anspruch 10. Bevorzugte Ausgestaltungen ergeben sich aus den Unteransprüchen und aus der Beschreibung.

Die vorliegende Erfindung beschreibt eine Funkbakenanordnung in öffentlichen Funkbändern, die insbesondere von allen gängigen Mobilfunkgeräten empfangen werden können und aufgrund ihrer räumlichen Anordnung und von Funkbakenkennungen wie bevorzugt eine Zahlenkodierung der ausgesendeten Kennungen eine eindeutige Zuordnung des Fahrstreifens und der Fahrtrichtung von im Auto mitgeführten Mobilfunkempfängern erlaubt. Dieses erlaubt auch eine Warnung vor Falschfahrern.

Der Hauptgedanke der Erfindung liegt darin, die weite Verbreitung von Mobilfunkgeräten zur Erkennung von Gefahren durch Falschfahrer auszunutzen. Ferner besteht ein Hauptgedanke der Erfindung darin, durch eine geschickte Anordnung von Funkbaken bestimmte Mustersequenzfolgen zu erzeugen, die durch die systematische Auswertung von Telernetriedaten die Durchfahrt in einer unzulässigen Fahrtrichtung fahrbahngenau und zuverlässig erkennen lassen, und darüber hinaus es ermöglichen, andere Verkehrsteilnehmer in Echtzeit und Flächendeckend vor Gefahren zu warnen. Dieses löst das lange bestehende Problem der Falschfahrererkennung. Falschfahrten treten auf, wenn Autofahrer absichtlich oder aus Versehen in eine falsche Fahrtrichtung auf einer Autobahn auffahren oder auf der Autobahn wenden. Da auch viele Fahrer von Automobilen Mobilfunkgerät mit sich führen, können Falschfahrer erkannt werden. Auch ist das System bis auf die Anordnung der Funkbaken nicht länder- oder gebietsgebunden ist, weil Mobilfunkgeräte weltweit verbreitet sind und der Datenzugriff weltweit auch per Roaming verfügbar ist.

Ferner wird die Erfindung dadurch begünstigt, dass Funkbaken mit geringem Aufwand und kostengünstig kommerzieli verfügbar sind. Solar- oder batteriebetriebene Funkbaken sind im Handel zu geringen Stückpreisen vorhanden und können auf einfache Weise an bestehenden Leitpfosten oder Leitplanken von Fernstraße angebracht werden. Der Kerngedanke besteht also im Wesentlichen aus der räumlichen Anordnung von Funkbaken, der Erkennung und Abgleich von Sequenzfolgen, dem flächendeckenden Zugriff und dem Benutzen der Fähigkeiten der Telemetrie von Mobilfunkgeräten. Ferner können auch andere Daten wie Fahrbahnbeschaffenheit, akustische Daten oder Videodaten zur Absicherung der Plausibilität von aufgenommenen Daten verwendet werden.

Erfindungsgemäß werden nun während der Fahrt nacheinander die ausgesendeten Kennungen der Funkbaken von dem Funkempfänger im Fahrzeug empfangen und als empfangene Sequenzfolge im Funkempfänger gespeichert. Auf Basis dieser empfangenen Sequenzfolge kann die tatsächliche Fahrtrichtung ermittelt werden.

Dazu wird bevorzugt diese empfangene Sequenzfolge mit einer hinterlegten sequenziellen Reihenfolge (Mustersequenzfolge) verglichen. Diese Mustersequenzfolge kann die örtliche Reihenfolge der Funkbaken entlang der vorgegebenen Fahrtrichtung repräsentieren. Stimmen diese beiden Sequenzfolgen miteinander überein, so fährt das Fahrzeug in der vorgegeben Fahrtrichtung. Andernfalls liegt eine Falschfahrt vor. Für die Hinterlegung der Mustersequenzfolge müssen die zugehörigen Kennungen nicht explizit in einem Speicher abgelegt sein; vielmehr reicht es aus, wenn die Mustersequenzfolge in Form eines Algorithmus (Bildungsregel) zur Erzeugung einer Reihe von expliziten Kennungen abgespeichert ist.

Als Systematik der Bildungsregel der Mustersequenzfolge ist bevorzugt so auszuwählen, dass diese geeignet ist, aus dem Einhalten der Systematik oder dem systematischen Abweichen von der Mustersequenzfolge auf eine Falschfahrt zurück zu schließen.
Eine Ausprägung eine solchen Systematik ist ein orthogonale Bildungsregel für die Codereihenfolge der Empfangsfolge für die erwartete Fahrtrichtung und die gegenläufige Bewegungsrichtung aufzustellen, weil Fahrzeuge auf einer Straße mit hoher Wahrscheinlichkeit nur in zwei entgegengesetzten Fahrtrichtungen unterwegs sind und Abweichungen ausgeschlossen werden können.

Als Funkempfänger bzw. Mobilfunkgerät können auch im Fahrzeug fest eingebaute Geräte angesehen werden, die insbesondere für den Empfang von Mobilfunksignalen und Signalen des Nahbereichsfunks eingerichtet sind.

Bevorzugt kann ferner zwischen unterschiedlichen Arten von Kennungen unterschieden werden. Die Kennungen unterschiedlicher Art sind unterschiedlichen vorbestimmten Mengen von Kennungen zugeordnet, welche insbesondere keine Schnittmengen miteinander aufweisen. So können sich die Kennungen beispielsweise durch unterschiedliche Paritäten (Kennungen bestehen aus geraden bzw. ungeraden Zahlenwerten), unterschiedliche Zeichentypen (z.B. Kennungen bestehen ausschließlich aus Buchstaben bzw. Ziffern), Zugehörigkeit zu unterschiedlichen vorbestimmten mathematisch definierten Mengen (z.B. Zahlenwerte der Kennungen sind größer bzw, kleiner als ein bestimmter Wert) auszeichnen.

Das System zur Umsetzung des Verfahrens umfasst eine Viehlzahl von Funkbaken, die jeweils eine, insbesondere eindeutige, Kennung im Nahbereichsfunk aussenden. Die Sendegebiete von zumindest zwei Funkbaken, die sich in unterschiedlichen Längspositionen entlang des Straßenabschnitts befinden oder die einer gemeinsamen Mustersequenz zugeordnet sind, dürfen sich dabei nicht überschneiden. Betrachtet in der vorgeschriebenen Fahrtrichtung müssen diese Sendegebiete folglich hintereinander angeordnet sein.

Es ist bevorzugt, dass sämtliche auf einer Seite eines Fahrstreifens angeordneten Funkbaken Kennungen einer ersten Art von Kennungen aussenden und sämtliche auf einer anderen Seite eines Fahrstreifens angeordnete Funkbaken Kennungen einer zweiten Art von Kennungen aussenden. Durch eine mögliche Erkennung, auf welcher Fahrzeugseite die jeweiligen Kennungen ausgesendet werden, kann die Bestimmung der Fahrtrichtung verifiziert werden.

Ferner ist bevorzugt, dass ein zellularer Fernbereichsfunk, im Bereich des Straßenabschnitts ein Signal aussendet, durch welches eine Aktivierung des Empfangs der Kennungen in einem Mobilfunkgerät veranlasst wird. Hierdurch kann auch bei Verlassen des Straßenabschnitts dieser Empfang wiederausgeschaltet werden. Durch dieses Signal kann folglich die Fahrtrichtungsbestimmung aktiviert bzw. deaktiviert werden. Hierbei werden folglich die wenig energieintensiven Möglichkeiten des Mobilfunks zur groben Positionsbestimmung genutzt, um zu erkennen, dass sich das Fahrzeug örtlich im Bereich des Systems zur Fahrtrichtungserkennung befindet. Erst dann wird die aufwendigere Fahrtrichtungsbestimmung eingeschaltet.

Die Erfindung wird anhand der Figuren nachfolgend näher beschrieben.
Figur 1a zeigt eine Autobahnauffahrt mit getrennten Fahrbahnen und einer Skizze des erfindungsgemäßen Systems und eines Fahrzeugs, welches in vorgeschriebener Fahrtrichtung fährt,
Figur 1b zeigt eine Autobahnauffahrt mit getrennten Fahrbahnen und eine Skizze des erfindungsgemäßen Systems und eines Fahrzeugs, welches entgegen der vorgeschriebenen Fahrtrichtung fährt,
Figur 1c zeigt eine Autobahnauffahrt mit getrennten Fahrbahnen und eine Skizze einer Abwandlung des erfindungsgemäßen Systems und eines Fahrzeugs, welches entgegen der vorgeschriebenen Fahrtrichtung fährt,
Figur 2 zeigt eine Autobahn mit zwei Richtungsfahrbahnen und eine Skizze des erfindungsgemäßen Systems und eines Fahrzeug, welches entgegen der vorgeschriebenen Fahrtrichtung fährt,
Figur 3 zeigt eine dreisstreifige Fahrbahn einer Autobahn und eine Skizze einer Abwandlung des erfindungsgemäßen Systems und eines Fahrzeugs, welches entgegen der vorgeschriebenen Fahrtrichtung fährt,
Figur 4 zeigt eine sechsstreifige Autobahn und eine Skizze einer Abwandlung des erfindungsgemäßen Systems und eines Fahrzeugs, welches in der vorgeschriebenen Fahrtrichtung fährt.

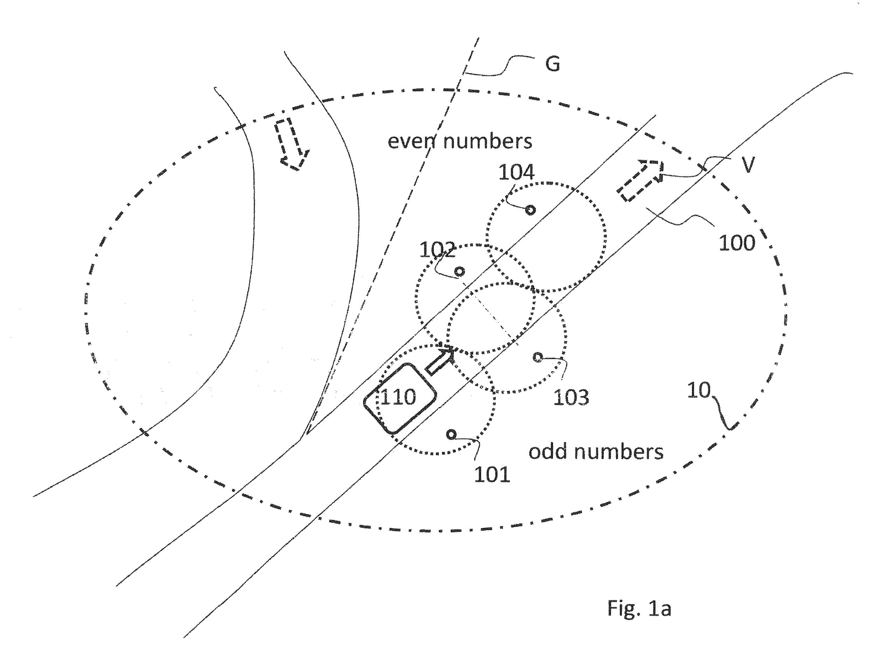

In Figur 1a ist ein System zur Umsetzung des erfindungsgemäßen Verfahrens skizziert. Es umfasst eine Anordnung von Funkbaken mit zwei Funkbaken 101, 103 am rechten Fahrbahnrand einer Autobahnauffahrt 100 und zwei Funkbaken 102, 104 am linken Fahrbahnrand der Auffahrt 100. Die Auffahrt 100 stellt einen Straßenabschnitt dar. Die Funkbaken 102 und 103 stehen sich im Wesentlichen auf der linken und rechten Fahrbahnseite gegenüber und sind damit in einer gemeinsamen Längsposition des Straßenabschnitts angeordnet. Die Sendegebiete der beiden Funkbaken 102, 103 überschneiden sich. Die Sendegebiete der Funkbaken 101 und 104, die den größten Abstand zueinander haben und auch an unterschiedlichen Längspositionen (also in Fahrrichtung betrachtet nacheinander) des Straßenabschnitts angeordnet sind, überschneiden sich nicht. Die Sendegebiete sind durch gestrichelte Kreise um die Funkbaken herum dargestellt; die Sendegebiete werden durch die maximale (ggf. richtungsabhängige) Sendereichweite definiert.

Die Funkbaken 101 und 103 am rechten Fahrbahnrand strahlen im Wesentlichen eine Kennung mit ungeraden Codesymbolen aus. Die Codesymbole sind beispielsweise ungerade Zahlen "101" und "103" und die Funkbaken auf der linken Seite 102 und 104 strahlen Codesymbole mit geraden Zahlen "102" und "104" aus.

Das Fahrzeug 110 führt nun ein Mobilfunkgerät mit sich. Nach dem Einfahren in den Sendebereich einer Mobüfunkzelle 10 wird durch ein Signal des Fernbereichsfunknetzes dem Mobiltelefon ein Befehl zum Einschalten des Nahbereichsfunkempfangs gegeben. Durch den Fernbereichsfunk wird eine Mustersequenzfolge von Codesymbolen von Funkbaken des Nahbereichsfunkempfangs an das Mobiltelefon zur Hinterlegung im Mobiltelefon übertragen. Das Mobiltelefon scannt nun den Nahbereichsfunk auf Kennungen von Funkbaken. Beim Einfahren in das Sendegebiet der Funkbake 101 empfängt das Mobiltelefon die Kennung der Funkbake 101. Fährt das Auto weiter entlang der Straße werden die Kennungen der beiden nächsten Funkbaken 102 und 103 empfangen. Das Fahrzeug verlässt das Sendegebiet der ersten Funkbake 101 und empfängt nun die Kennung der Funkbake 104. Daraufhin verlässt das Fahrzeug das Sendegebiet der Funkbaken 102 und 103 und anschließend das Sendegebiet der Funkbake 104.

Die Sequenzfolge der empfangenen Kennungen, also die Liste der Kennungen in der empfangenen Reihenfolge, wird in dem Speicher des Mobilfunkgerätes nacheinander abgelegt. In dem Speicher ist nun entweder die empfangene Sequenzfolge 101, 102, 103, 104 oder alternativ die empfangene Sequenzfolge 101, 103, 102, 104 abgelegt. Diese empfangene Sequenzfolge wird nun mit den erwarteten, hinterlegten Mustersequenzfolgen verglichen. Entsprechen sich die beiden Sequenzfolgen, ist das Fahrzeug in der vorgeschriebenen Fahrtrichtung V durch die Autobahnauffahrt 100 gefahren. Anderenfalls wird ein Signal ausgelöst und über den Fernbereichsfunk eine Warnung weitergegeben. Verlässt das Fahrzeug 110 die Mobilfunkzelle 10 wird der Nahbereichsfunkempfang im Mobilfunkgerät ausgeschaltet.

Der räumliche Abstand der Funkbaken voneinander ist so gewählt, dass eine möglichst geringe Überlappung der Sendegebiete gegeben ist. Dieses wird dadurch erzielt, dass die Funkbaken zumindest teilweise in unterschiedlichen Längspositionen angeordnet sind oder die Antennen eine charakteristische Richtwirkung aufweisen.

Vereinfacht kann eine feste Musterfolge vereinbart werden, wenn die gleiche räumliche Anordnung der Funkbaken verbaut wird Beispielsweise kann vereinbart werden, dass eine gültige Mustersequenzfolge im Wesentlichen ein erstes Element eines Codesymbols einer ersten Art ist und alle nachfolgenden Codesymbole der ersten Art eine aufsteigende Wertigkeit aufweisen.

Konkret kann als Mustersequenzfolge für die vorgeschriebenen Fahrtrichtung das erste Symbol eine "101" sein, die Mustersequenzfolge umfasst ferner die Symbole "103" und "105", wenn das Fahrzeug die Auffahrt in der vorgeschrieben Fahrtrichtung durchfährt, Ist das Fahrzeug 110 entgegen der vorgeschriebenen Fahrtrichtung V unterwegs, besteht die Sequenzfolge aus einer absteigende Reihe von Codesymbolen und das erste Codesymbole ist das höchste der Reihenfolge, in diesem Beispiel also ist das erste Symbol die Kennung "105", und die folgende Kennungen sind dann "103", "101". Die Kennungen "101" und "105" dürfen dabei nicht gleichzeitig auftreten, um Verwechslungen zu vermeiden. Dieses kann durch Vermeidung der Überlappung von Sendegebieten der Funkbaken erzielt werden.

Ferner sind die Kennungen der Funkbaken mit Kennungen der ersten Art auf der jeweils rechten Seite der vorgegebenen Fahrtrichtung V anzuordnen, und Kennungen einer zweiten Art in Funkbaken auf der linken Seite der vorgegebenen Fahrtrichtung vorzusehen. So kann über eine Richtwirkung des Nahbereichsempfangs eine zusätzliche Plausibilität über die tatsächliche Fahrtrichtung R und die vorgegebene Fahrtrichtung Verlangt werden. Im vorliegenden Fall werden die beiden unterschiedlichen Arten von Kennungen jeweils durch abweichende Paritäten (gerade / ungerade) definiert.

Im Regelfall können diese Funkbaken nach Einstellung des Sendgebiets und der Sendeleistung an den Leitpfosten der Autobahnausfahrt mechanisch befestigt werden. Solche Funkbaken werden im Frequenzbereich, der für die Kommunikation mit Bluetooth, Bluetooth LE, NEC, SRD oder ISM Funk oder WLAN vorgesehen sind, betrieben. Diese Standards sind auch in den meisten Mobiltelefonen vorhanden.

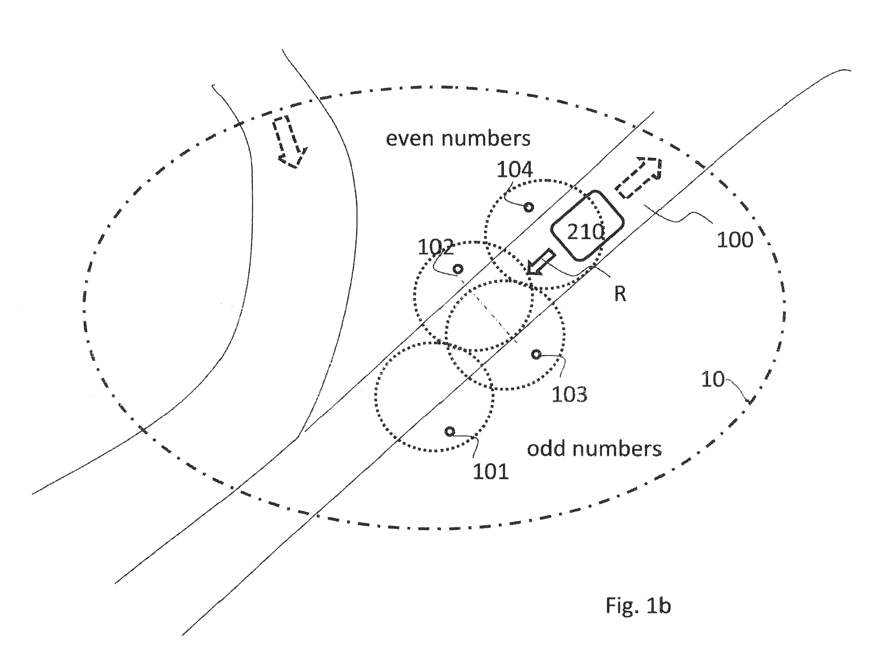

In Figur 1b ist ein Fahrzeug 210 entgegen der vorgeschriebenen Fahrtrichtung V unterwegs. Die vorgeschriebene Fahrtrichtung ist hier dargestellt durch einen gestrichelten Richtungspfeil V auf der Fahrbahn der Autobahnauffahrt 200.

Das Fahrzeug 210 führt ebenfalls ein Mobilfunkgerät mit sich. Nach dem Einfahren in die Autobahnauffahrt 200 gelangt es in den Sendebereich der Mobilfunkzelle 10. Durch ein Signal des Fernbereichsfunknetzes wird dem Mobiltelefon ein Befehl zum Einschalten des Nahbereichsfunkempfangs gegeben. Durch den Fernbereichsfunk wird eine Mustersequenz von erwarteten Kennungen des Nahbereichsfunkempfangs an das Mobiltelefon zur Hinterlegung im Mobiltelefon übertragen. Diese Mustersequenz entspricht der Musterfolge, die dem Fahrzeug 110 entsprechend der Beschreibung der Figur 1a übermittelt wurde. Das Mobiltelefon scannt nun den Nahbereichsfunk auf Kennungen von Funkbaken in der Umgebung von rund 20 Metern rund um seien Standort. Beim Einfahren in das Sendegebiet der Funkbake 104 empfängt das Mobiltelefon die Kennung "104" der Funkbake 104. Fährt das Auto weiter entlang der Straße werden die Kennungen "102" und "103" der beiden nächsten Funkbaken 102 und 103 empfangen. Das Fahrzeug verlässt das Sendegebiet der Funkbake 104, und empfängt nun die Kennung "101" der Funkbake 101. Daraufhin verlässt das Fahrzeug die Sendegebiete der Funkbaken 102 und 103 und anschließend das Sendegebiet der Funkbake 101.

Die Sequenzfolge der empfangenen Kennungen ist nun entweder die Sequenzfolge 104, 102, 103, 101 oder alternativ die Sequenzfolge 104, 103, 102, 101. Diese empfangene Sequenzfolge wird nun mit der erwarteten und hinterlegten Mustersequenzfolge der Kennungen verglichen. Da die empfangene Sequenzfolge nicht einer der hinterlegten Mustersequenzfolgen entspricht wird festgestellt, dass sich das Fahrzeug entgegen der vorgeschriebene Fahrtrichtung bewegt. Es wird ein Warnsignal ausgelöst und über den Fernbereichsfunk eine Warnung weitergegeben. Verlässt nun das Fahrzeug 110 die Mobilfunkzelle 10 wird der Nahbereichsfunkempfang im Mobilfunkgerät ausgeschaltet, um so Energie in dem Mobilfunkgerät zu sparen und die Akkulaufzeit effektiv zu verwenden.

Alternativ kann auch beim Installieren der Applikation auf dem Mobilfunkgerät eine Liste von Mobilfunkzellen-Kennungen hinterlegt sein, bei denen der Nahbereichsfunkempfang aktiviert wird. Die Liste kann jederzeit durch Austausch mit dem Internet und/oder durch Kontakt mit dem Mobilfunknetz drahtlos "Over the Air" (OTA), insbesondere im Fall des Roamings beim Übertritt in andere Versorgungsgebiete oder Länder, aktualisiert werden. Die Daten werden in einem Speicherbereich des Mobiltelefons in Form eines Lookuptable geschrieben und mit den Zellkennungen der Mobilfunkzelle 10 abgeglichen, in die das Mobiltelefon eingeloggt ist. Alternativ können auch lokale WiFi oder WLAN Netze an den Messpunkten eingesetzt werden, deren Kennung hinterlegt wird. Im Alarmierungsfall kann eine Warnung an das Fernbereichsfunknetz auch über eine Textnachricht, z.B. eine SMS, an das Mobilfunknetz gesendet werden. Die Textnachricht wird dann durch die Kurzmitteilungszentrale im Mobilfunknetz an einen Server zur Auswertung der Warnmeldungen weitergeleitet. Die Warnung kann auch durch WiFi und per Email oder einem Instant Message Dienst weitergeleitet werden. Die Technik ist damit unabhängig vom Mobilfunknetz weltweit einsetzbar.

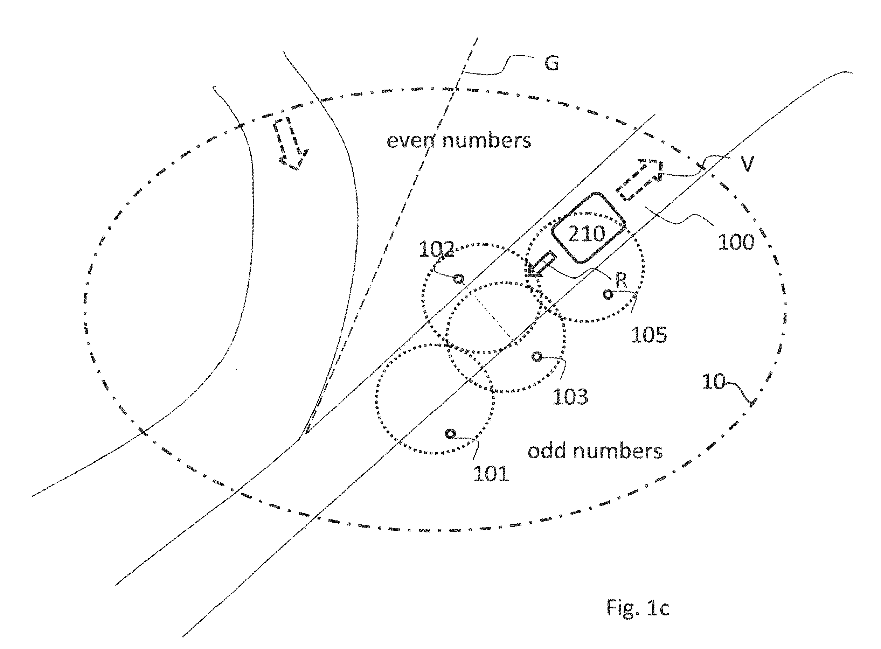

Wie in Figur 1c dargestellt ist, sind auch andere Anordnungen der Funkbaken denkbar, wenn alternative Mustersequenzfolgen entsprechend der erwarteten Abfolge von empfangbaren Kennungen hinterlegt sind.

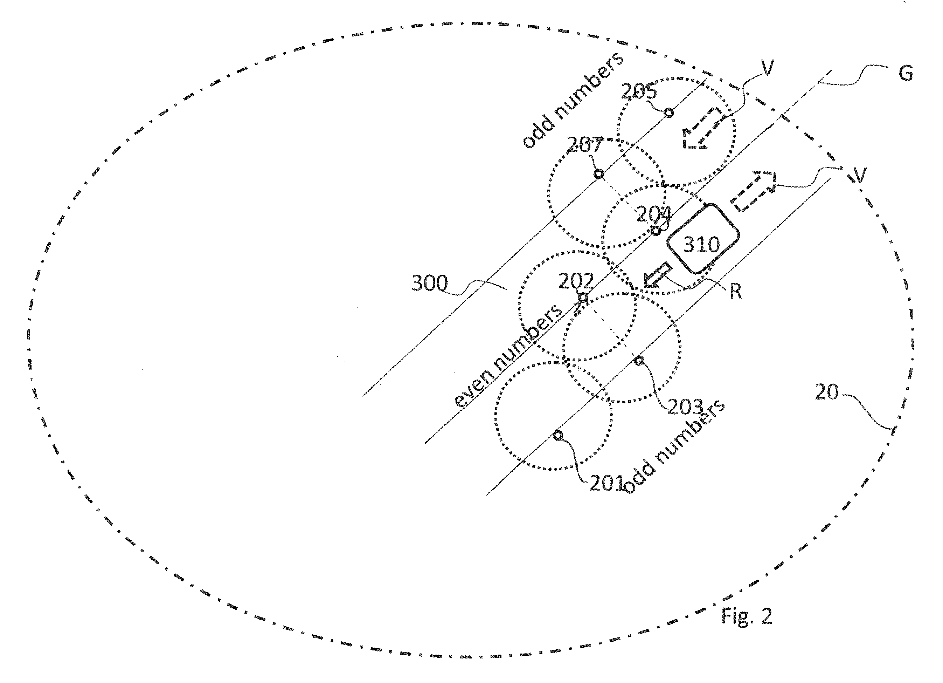

In Figur 2 ist ein System zur Umsetzung des erfindungsgemäßen Verfahrens für den Abschnitt 300 einer Landstraße skizziert, welches weitgehend auf dem zu Figur 1 beschriebenen Verfahren basiert. Der Straßenabschnitt umfasst eine Fahrbahn mit einem Fahrstreifen pro Fahrtrichtung. Die Anordnung der Funkbaken umfasst sechs Funkbaken, zwei Funkbaken am rechten 201, 203 Fahrbahnrand der Landstraße 300, zwei Funkbaken 202, 204 an der Fahrstreifengrenze, entweder aufgebracht auf dem Mittelstreifen oder eingelassen in den Straßenbelag, und zwei Funkbaken 207, 205 am linken Fahrbahnrand der Landstraße. Die Funkbaken 202 und 203 und 204 und 207 stehen sich im Wesentlichen an den Fahrstreifenrändern gegenüber, und die Sendegebiete der Funkbaken können sich überschneiden, mit Ausnahme der Sendegebiete der Funkbaken 201 und 205. Die Funkbaken 201, 203 und 205, 207 an den Fahrbahnrändern strahlen im Wesentlichen eine Kennung der ersten Art, beispielweise mit ungeraden Codesymboien aus. Die Codesymbole sind beispielsweise die ungerade Zahlen "201", "203" und "205", "207" und die Funkbaken in der Mitte 202 und 204 strahlen Kennungen der zweiten Art aus, beispielweise die geraden Zahlen "202" und "204".

Das Fahrzeug 310 führt ein Mobilfunkgerät mit sich. Nach dem Einfahren auf die Landstraße 300 gelangt es in den Sendebereich der Mobilfunkzelle 20, das Fahrzeug (Fahrtrichtung R) bewegt sich aber entgegengesetzt zur vorgeschriebenen Fahrtrichtung V des Fahrstreifens, auf dem es sich befindet. Durch ein Signal des Fernbereichsfunknetzes wird dem Mobiltelefon ein Befehl zum Einschalten des Nahbereichsfunkempfangs gegeben. Durch den Fernbereichsfunk wird eine Mustersequenzfolge von erwarteten Codesymbolen des Nahbereichsfunkempfangs der Funkbaken an das Mobiltelefon übertragen. Das Mobiltelefon scannt nun den Nahbereichsfunk auf Kennungen von Funkbaken in der Umgebung von rund 20 Metern. Beim Einfahren in das Sendegebiet der Funkbake 204 empfängt das Mobiltelefon die Kennung der Funkbake 204. Fährt das Auto weiter entlang dem Straßenverlauf werden die Kennungen der beiden nächsten Funkbaken 202 und 203 empfangen. Das Fahrzeug verlässt das Sendegebiet der Funkbake 204, und empfängt nun die Kennung der Funkbake 201. Daraufhin verlässt das Fahrzeug die Sendegebiete der Funkbaken 202 und 203 und anschließend das Sendegebiet der Funkbake 201.

Hervorzuheben ist hierbei, dass die Sendebereiche der am Fahrbahnrand angeordneten Funkbaken (ungerade Kennungen) jeweils die Fahrtrichtungsgrenze G, also die Grenze zwischen zwei Fahrstreifen mit jeweils unterschiedlichen vorgegebenen Fahrtrichtungen nicht überschreiten. Im vorliegenden Fall die Fahrbahnmitte (Grenze der beiden Fahrstreifen) die Fahrtrichtungsgrenze G dar. Ansonsten könnte das Fahrzeug 310 dennoch die Kennung "205" erfassen, was zu einer fehlerhaften Auswertung führt. Die Fahrtrichtungsgrenze G gilt dann als überschritten, wenn der Sendebereich einer Funkbake in zwei Fahrstreifen mit jeweils entgegengesetzten vorgegebenen Fahrtrichtungen V hineinragt.

Die Sequenzfolge der empfangenen Kennungen in dem Speicher des Mobiltelefons ist nun entweder die Sequenzfolge 204, 202, 203, 201 oder alternativ die Sequenzfolge 204, 203, 202, 201. Die empfangene Sequenzfolge wird nun mit den erwarteten hinterlegten Mustersequenzfolgen der Kennungen verglichen. Entsprechen sich die Sequenzfolgen, ist das Fahrzeug in vorgeschriebener Fahrtrichtung durch die Autobahnauffahrt gefahren. Anderenfalls wird ein Signal ausgelöst und über den Fernbereichsfunk eine Warnung weitergegeben. In diesem Fall würden erwartete Mustersequenzfolgen lauten: 205, 207, 204, 202 oder alternativ die Mustersequenzfolge 205, 204, 207, 202 für die Fahrtrichtung Süd-Westen und die Mustersequenzfolge 201, 202, 203, 204 oder alternativ die Mustersequenzfolge 101, 203, 202, 204 für die Fahrtrichtung Nord-Osten. Keine der erwarteten Sequenzfolgen wurde empfangen. Denn die erwartete Mustersequenzfolge fängt stets mit einem ungeraden Codesymbol als Kennung an und Werte der ungeraden Kennungen steigen dann sequenziell an.

Im vorliegenden Fall beginnt die empfangene Sequenzfolge mit einer geraden Kennung und die Werte der ungeraden Kennungen sind absteigend. Also ist die empfangene Sequenzfolge ungültig und der Fahrer fährt anscheinend entgegen der vorgeschriebenen Fahrtrichtung V. Verlässt nun das Fahrzeug 110 die Mobilfunkzelle 20 wird der Nahbereichsfunkempfang im Mobilfunkgerät ausgeschaltet, um so Energie in dem Mobilfunkgerät zu sparen und die Akkulaufzeit effektiv zu verwenden.

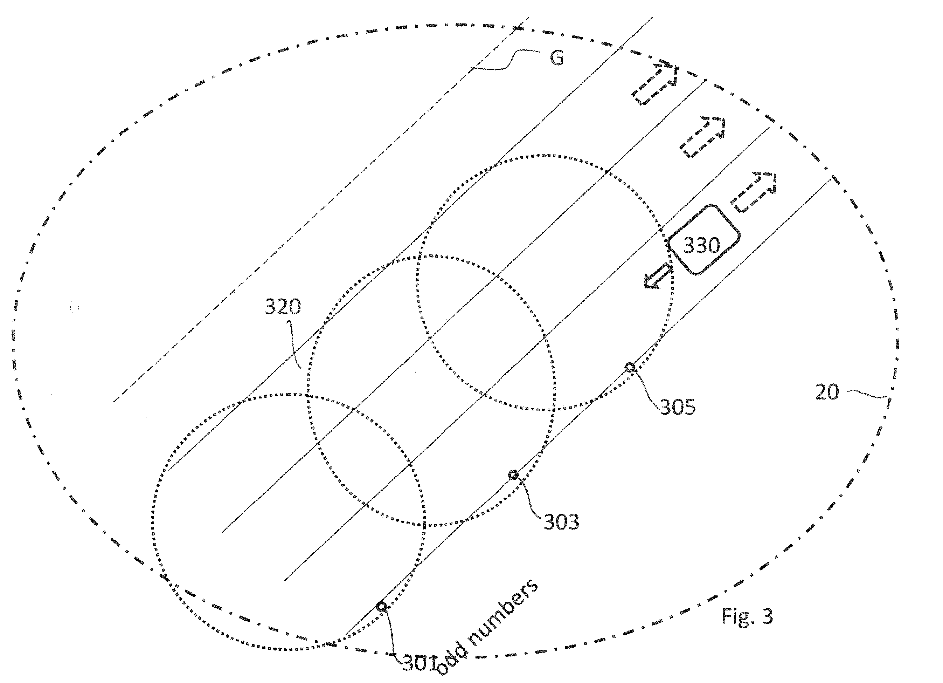

In Figur 3 ist ein System zur Umsetzung des erfindungsgemäßen Verfahrens für eine Fernstraße skizziert; die Fernstraße umfasst jeweils separate Fahrbahnen 330 pro Fahrtrichtung mit zumindest zwei, im vorliegenden Fall drei Fahrstreifen pro Fahrrichtung. Die Anordnung der Funkbaken umfasst drei Funkbaken 301, 303, 305 am rechten Fahrbahnrand. Die Sendegebiete der Funkbaken 301 und 305 überschneiden sich nicht. Die Funkbaken 301, 303 und 305 an dem Fahrbahnrand strahlen im Wesentlichen eine Kennung der ersten Art, beispielweise mit ungeraden Codesymbolen über alle drei Fahrstreifen aus. Die Codesymbole sind beispielsweise die ungerade Zahlen "301", "303" und "305".

Das Fahrzeug 330 führt wiederum ein Mobilfunkgerät mit sich. Nach dem Einfahren auf die Fahrbahn entgegen der vorgeschriebenen Fahrtrichtung V gelangt es in den Sendebereich der Mobilfunkzelle 20. Durch ein Signal des Fernbereichsfunknetzes wird dem Mobiltelefon ein Befehl zum Einschalten des Nahbereichsfunkempfangs gegeben. Durch den Fernbereichsfunk werden erwartete Mustersequenzfolgen von Codesymbolen des Nahbereichsfunkempfangs an das Mobiltelefon übertragen. Das Mobiltelefon scannt nun den Nahbereichsfunk auf Kennungen von Funkbaken in der Umgebung von rund 20 Metern. Beim Einfahren in das Sendegebiet der Funkbake 305 empfängt das Mobiltelefon die Kennung der Funkbake 305. Fährt das Auto weiter entlang dem Straßenverlauf werden die Kennungen der nächsten Funkbake 303 empfangen. Das Fahrzeug verlässt das Sendegebiet der Funkbake 303, und empfängt nun die Kennung der Funkbake 301. Daraufhin verlässt das Fahrzeug das Sendegebiet der Funkbake 301.

Die Sequenzfolge der empfangenen Kennungen in dem Speicher des Mobiltelefons ist nun die Sequenzfolge 305, 303, 301. Diese Sequenzfolgen werden nun mit den erwarteten hinterlegten Mustersequenzfolgen der Kennungen, hier also 301, 303, 305 verglichen. Die Sequenzfolgen entsprechen sich nicht, weil die gespeicherte Sequenzfolge zwar mit einer ungeraden Kennung beginnt, aber sequentiell aufsteigend ist, Das Fahrzeug fährt also entgegen der in vorgeschriebene Fahrtrichtung V. Es wird ein Warnsignal ausgelöst und über den Fernbereichsfunk eine Warnung weitergegeben.

Hier können zwar Sendebereiche der Funkbaken die einzelnen Fahrstreifen überlappen; eine Überlappung der Sendebereiche mit den nicht dargestellten Fahrstreifen der Fahrbahn für die entgegengesetzte Fahrtrichtung ist nicht gegeben. Insofern überschreiten auch hier die Sendebereiche nicht die Fahrtrichtungsgrenze G.

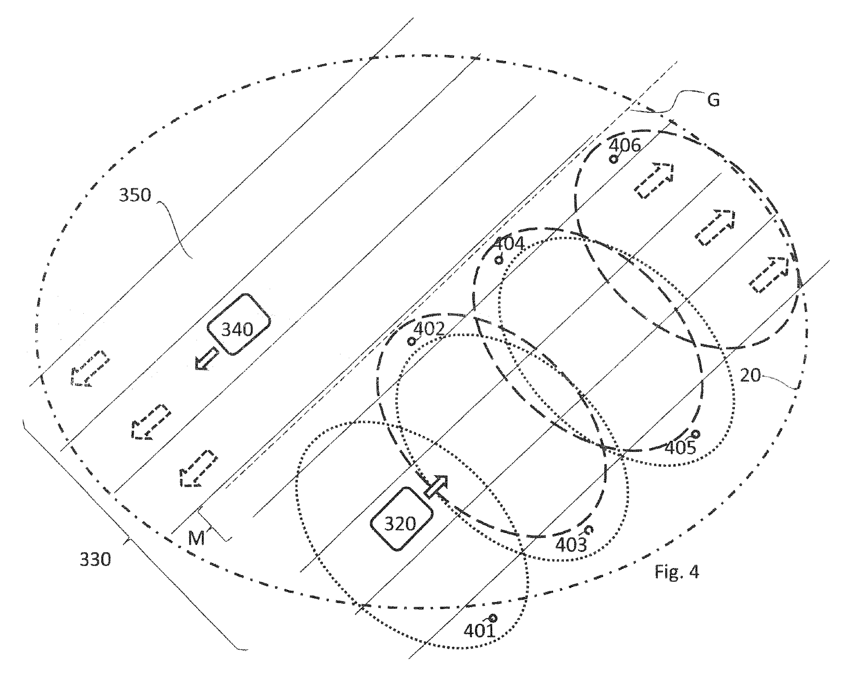

In Figur 4 ist ein System zur Umsetzung des erfindungsgemäßen Verfahrens für eine Autobahn 350 gezeigt. Die Autobahn umfasst eine Fahrbahnen 330 mit zumindest zwei, im vorliegenden Fall drei Fahrstreifen pro Fahrtrichtung. Die Fahrstreifen der einen Fahrrichtung sind durch einen Mittelstreifen M von den Fahrstreifen der anderen Fahrtrichtung getrennt. Die Anordnung der Funkbaken umfasst sechs Funkbaken. Die Sendebereiche überlappen nicht die Fahrtrichtungsgrenze G, die sich im Bereich des Mittelstreifens M befindet. Drei Funkbaken 401, 403, 405 sind am rechten Fahrbahnrand angeordnet, drei Funkbaken 402, 404, 406 sind am Mittelstreifen M angeordnet. Die Funkbaken 402, 403 und 404, 405 stehen einander im Wesentlichen gegenüber, und die Sendegebiete der Funkbaken überschneiden sich, mit Ausnahme der Sendegebiete der Funkbaken 401 und 405.

Die Funkbaken 401,403 und 405 an dem rechten Fahrbahnrand strahlen im Wesentlichen eine Kennung der ersten Art, beispielweise mit ungeraden Codesymbolen aus. Die Codesymbole sind beispielsweise die ungerade Zahlen "401", "403" und "405" und die Funkbaken im Mittelstreifen 402, 404 und 406 strahlen Kennung der zweiten Art aus, beispielweise mit geraden Zahlen "402", "404" und "406".

Das Fahrzeug 320 führt ein Mobilfunkgerät mit sich. Nach dem Einfahren auf die Autobahn gelangt es in den Sendebereich der Mobilfunkzelle 20. Das Fahrzeug 330 befindet sich auf einem Fahrstreifen in der vorgeschriebenen Fahrtrichtung V. Durch ein Signal des Fernbereichsfunknetzes wird dem Mobiltelefon ein Befehl zum Einschalten des Nahbereichsfunkempfangs gegeben. Durch den Fernbereichsfunk werden erwartete Mustersequenzfolgen von Codesymbolen des Nahbereichsfunkempfangs an das Mobiltelefon übertragen und dort hinterlegt. Das Mobiltelefon scannt nun den Nahbereichsfunk auf Kennungen von Funkbaken in der Umgebung von rund 20 Metern. Beim Einfahren in das Sendegebiete der Funkbake 401 empfängt das Mobiltelefon die Kennung der Funkbake 401. Fährt das Auto 330 weiter entlang dem Straßenverlauf, werden die Kennungen der beiden nächsten Funkbaken 402, 403 und 404, 405 und 406 empfangen.

Die Sequenzfolge der empfangenen Kennungen in dem Speicher des Mobiltelefons ist nun entweder die Sequenzfolge 401, 402, 403, 404, 405 und 406 oder alternativ die Sequenzfolge 401, 403, 402, 405, 404, 406 oder alternativ die Sequenzfolge 401, 402, 403, 405, 404, 406 oder ferner alternativ die Sequenzfolge 401, 402, 403, 404, 405, 406. Diese Sequenzfolgen werden nun mit den erwarteten hinterlegten Mustersequenzfolgen der Codesymbole verglichen. Es handelt sich bei den Sequenzfolgen um jeweils gültige Sequenzen im Sinne der Verwendung der vorgeschriebenen Fahrtrichtung R, weil der Zahlenwert der ersten Kennung ungerade ist, und die ungeraden Zahlenwerte der weiteren Kennungen sequentiell aufsteigend sind. Das Fahrzeug ist also in vorgeschriebene Fahrtrichtung V auf der Autobahn gefahren. Es wird also kein Signal über den Fernbereichsfunk zur Warnung weitergegeben.

Dem Fachmann kann aufgrund seines Fachwissens unter Kenntnis dieser Erfindung weitere Ausführungsform in den Sinn kommen, ohne den Kern der Erfindung zu verlassen. So können z.B. unterschiedliche Codes verwendet werden, die ähnliche Eigenschaften haben wie gerade und ungerade Ziffern aus den vorhergehenden Beispielen. Möglich sind insbesondere orthogonale Codes, denen auch eine Wertigkeit zuzuordnen ist.

Ferner ist es auch möglich, dass unterstützend eine Ortung der jeweils linken oder rechten Begrenzung aufgrund ersten oder zweiten Art von Kennungen durchgeführt wird. Dieses ist vor allen Dingen denkbar bei fest installierten Systemen, wie z.B. Navigationssystem oder stationär betriebenen Telemetrie-Systemen im Auto, die zusätzlich zu der Sequenzfolgen als Plausibilitätskriterium die räumliche Funkortung der Baken und die Zuordnung der Code zu den linken oder rechten Seiten des Fahrbahnrand das ausnutzen.

## Patentansprüche

1. Verfahren zur Erkennung der Fahrtrichtung und zur Ermittlung von Falschfahrten eines sich in einem Straßenabschnitt auf einem Fahrstreifen bewegenden Fahrzeugs (110, 210, 310, 330, 320, 340),
wobei von einer Anordnung von Funkbaken (102-105; 201-207; 301-303; 401-406), die entlang des Fahrstreifens angeordnet sind, jeweils Kennungen ("102"-"105"; "201"-"207"; "301"-"303"; "401"-"406") ausgesendet werden,
wobei die Funkbaken einen Nahbereichsfunk verwenden,
wobei beim Durchfahren des Straßenabschnitts ein im Fahrzeug angeordneter Funkempfänger nacheinander die ausgesendeten Kennungen der Funkbaken empfängt,
wobei der Funkempfänger bei Einfahrt in den Straßenabschnitt durch einen Fernbereichsdatenfunk aktiviert wird und
wobei anhand der Reihenfolge der nacheinander empfangenden Kennungen die tatsächliche Fahrtrichtung (R) des Fahrzeugs ermittelt wird.

2. Verfahren nach Anspruch 1,
**dadurch gekennzeichnet,**
**dass** die Reihenfolge der nacheinander empfangenden Kennungen als empfangene Sequenzfolge mit einer hinterlegten sequenziellen Reihenfolge, mithin einer Mustersequenzfolge, verglichen wird, wodurch die Fahrtrichtung (R) des Fahrzeugs ermittelt wird.

3. Verfahren nach Anspruch 1 oder 2,
**dadurch gekennzeichnet,**
**dass** die Reichweite des Nahbereichsfunks geringer ist als der Abstand der sendenden Funkbake zu einer Fahrtrichtungsgrenze (G) des Straßenabschnitts.

4. Verfahren nach einem der vorherigen Ansprüche,
**dadurch gekennzeichnet,**
**dass** der Fernbereichsdatenfunk eine Reichweite aufweist, die größer ist als der Abstand der beiden am weitesten entfernten Funkbaken, deren Kennungen in einer gemeinsamen sequenziellen Reihenfolge hinterlegt sind.

5. Verfahren nach einem der vorherigen Ansprüche,
**dadurch gekennzeichnet,**
**dass** ein Mobilfunkgerät mittels des Empfängers für einen Nahbereichsfunk, der die Signale der Funkbaken am Straßenrand decodiert, und erkennt, dass sich das Mobilfunkgerät in Richtung der vorgeschriebenen Fahrtrichtung (V) bewegt, wenn als erste Kennung einer Funkbake die Kennung einer ersten Art empfangen wird und danach eine sequenziell aufsteigende Reihe von Kennungen und als letztes eine Kennung der zweiten Art empfangen wird.

6. Verfahren nach einem der vorherigen Ansprüche,
**dadurch gekennzeichnet,**
**dass** eine gültige Mustersequenzfolge im Wesentlichen ein erstes Element einer Kennung der ersten Art ist und alle nachfolgenden Kennungen der ersten Art eine aufsteigende Wertigkeit aufweisen.

7. Verfahren nach einem der vorherigen Ansprüche,
**dadurch gekennzeichnet,**
**dass** der Funkempfänger durch Funkortung erkennt, ob die erste Art der Kennung der rechten Fahrbahnseite zuzuordnen ist und die zweite Art der Kennung der linken Fahrbahnseite zuzuordnen ist.

8. Verfahren nach einem der vorherigen Ansprüche,
**dadurch gekennzeichnet,**
**dass** durch das Mobiltelefon neben dem Signal des Funkempfängers auch weitere Signale aus der Fahrbahnoberfläche oder der Fahrtgeschwindigkeitsmessung zum Verifizieren der Warnmeldung herangezogen werden.

9. System zur Erkennung der Fahrtrichtung von Fahrzeugen entsprechend dem Verfahren nach einem der vorherigen Ansprüche umfassend eine Anordnung von Funkbaken entlang der Fahrbahn und/oder eines Fahrstreifens eines Straßenabschnitts, die jeweils eine Kennung in einem Nahbereichsfunk aussenden,
wobei die Sendegebiete von zumindest zwei in unterschiedlichen Längspositionen des Straßenabschnittes befindlichen Funkbaken sich nicht überschneiden.

10. System nach Anspruch 9
**dadurch gekennzeichnet,**
**dass** sämtliche auf einer Seite eines Fahrstreifens angeordneten Funkbaken Kennungen einer ersten Art von Kennungen aussenden und sämtliche auf einer anderen Seite eines Fahrstreifens angeordnete Funkbaken Kennungen einer zweiten Art von Kennungen aussenden
wobei die erste und die zweite Art der Kennungen insbesondere inkongruent zueinander sind wie ungerade und gerade Zahlen.

11. System nach Anspruch 9 oder 10,
**dadurch gekennzeichnet,**
**dass** im Fahrzeug ein Mobilfunkgerät umfassend einen Empfänger für einen Nahbereichsfunk vorgesehen ist, welches die Kennungen der Funkbaken empfangen kann, und welches einen Speicher aufweist, der eingerichtet ist, um die Sequenzfolge der empfangenen Kennungen zu speichern,
das System umfasst ferner
eine Einrichtung, die eingerichtet ist zum Vergleichen der empfangenen Signale mit einem hinterlegten Muster von Kennungen, insbesondere von einem Fernbereichsfunknetz vorgegebenen Mustersequenzfolge und Ermitteln der Fahrtrichtung sowie
eine Ausgabeeinheit, insbesondere Anzeige, eingerichtet zur Ausgabe der ermittelten Fahrtrichtung.

12. System nach einem der Ansprüche 9 bis 11,
**dadurch gekennzeichnet,**
**dass** ein zellularer Fernbereichsfunk im Bereich des Straßenabschnitts ein Signal aussendet, durch welches eine Aktivierung des Empfangs der Kennungen in einem Mobilfunkgerät veranlasst wird und insbesondere durch welches bei Verlassen des Straßenabschnitts das Ausschalten der Funkbakenortung veranlasst wird.

13. System nach einem der Anspruch 9 bis 12,
**dadurch gekennzeichnet,**
**dass** die Kennungen, insbesondere Codesymbole, die von den Funkbaken ausgesendet werden, so gewählt sind, dass die Kennungen der jeweils rechten Fahrbahnseite in einem durch die Codesymbole der beiden Arten der jeweiligen Straßenränder in einem aufgespannten Codierungsraum orthogonal zueinander sind.

14. Computerprogramm zur Umsetzung des Verfahrens nach einem der Ansprüche 1 bis 8,

15. Computerprogrammprodukt zum Ablauf des Computerprogramms und zur Berechnung der Erkennung der Fahrtrichtung gemäß dem Verfahren nach den Ansprüchen 1 bis 8.
